# EUROPEAN PATENT APPLICATION

(11) **EP 4 597 937 A1**
(43) Date of publication of application: **06.08.2025**
(21) Application number: 22948954.7
(22) Date of filing: 27.09.2022
(51) Int. Cl.: H04L 27/00

(54) **RFID TAG ELEMENT, RFID TAG ASSEMBLY, AND OBJECT TO BE IDENTIFIED HAVING RFID TAG ASSEMBLY ATTACHED THERETO**

(71) Applicant: Shuyou (Shanghai) Technology Co., Ltd., Shanghai 200030 (CN)
(72) Inventor: KIM, Youngdo, Shanghai 200030 (CN); MA, Xiaomeng, Shanghai 200030 (CN)
(74) Representative: Winger
(86) International application number: PCT/CN2022/121743
(87) International publication number: WO 2024/000865

(57) **Abstract**

An RFID tag component, an RFID tag assembly and an object to be identified attached with the RFID tag assembly are disclosed. There is provided an RFID tag component, wherein the RFID tag component comprises: an insulating ring; a film antenna bonded to the inner peripheral surface of the insulating ring, the film antenna formed by connecting an IC chip with a metal loop antenna, the metal loop antenna being flexible so that the film antenna adheres to the inner peripheral surface of the insulating ring along a circumferential direction after being bonded to the inner peripheral surface; and a conducting medium layer adhering to an outer peripheral surface of the insulating ring in the circumferential direction and partially surrounding the insulating ring such that there is a slot between two ends of the conducting medium layer, wherein the conducting medium layer is inductively coupled with the metal loop antenna to radiate radio frequency signals from the IC chip outwardly through the slot.

## Description

### Field of the invention

The present invention relates to the field of radio frequency identification, and more specifically, to a radio frequency identification (RFID) tag component, an RFID tag assembly adapted to a tool, and an object to be identified attached with the RFID tag assembly.

### Background

Up to now, passive RFID technology has been widely used in various industrial fields and not only meets the needs of users, but also provides convenience of intelligence and computerization. Generally, the most outstanding technical characteristic of passive RFID tags in the UHF band is that Automatic Identification Data Capture technology is able to be used to identify a plurality of RFID tags in batches simultaneously in a non-contact manner in long range areas. Based on such characteristic, RFID technology is applied in industries such as national defense, procurement, construction, transportation, medical care, etc., and logistics, delivery, manufacturing, clothing, security, and so on. Also, with the development of RFID technology itself and its combination and deepening with other related technologies, RFID technology has been further developed.

An RFID system typically transmits or receives data through a contactless wireless RF channel by an RFID tag containing asset information, identifies product and asset information at an RFID reader, and utilizes the Internet or Local Area Network to enable a host computer or a dedicated server to use the product and asset information in an application program through middleware. Data collected by RFID readers is processed into useful information by middleware carried on a host computer or a server. Such information is connected to RFID system applications or enterprise systems such as Enterprise Resource Planning (ERP) systems, Warehouse Management Systems, Manufacturing Execution Systems (MES), and Inventory Management Systems, and is used as important information. Such RFID technology provides efficiency and reduces costs for related entities included in the supply chain management (SCM). For product producers, real-time automatic monitoring of production and sales of products in stages may be achieved; for product distributors, existing distribution management businesses may be improved through real-time product history management and appropriate inventory management; and for end users, economic costs may be reduced through management of product loss and inventory in a computerized manner.

In order to meet the specific needs to be realized in various industry fields, RFID tags may be composed of various structures, sizes and materials. And in order to improve durability and meet the mechanical strength requirements of the tools themselves, metal materials are generally used. In addition, due to the mechanical characteristics of the tools themselves and the ergonomic characteristics of the users, most tools are in the form of gentle curved surfaces or irregular curves, making it difficult to obtain flat surfaces for attaching RFID tags. Due to the diversity of the structures of these tools, it is difficult to apply RFID tag forms with a uniform structure to different tools. Thus, it is necessary to develop the most suitable special purpose RFID tags for different tools.

Attaching ultra-small RFID tag forms made of ceramic and PCB materials to the surfaces of most tools enhances durability of tags and improves appearance, and an individually designed plastic shell protects the RFID tags from the external environment. Such ultra-small RFID tag form typically consists of PCB material in bulk form and high-permittivity ceramic materials. Also, to maintain an ultra-small form-factor of the RFID tags, inductors and capacitors are connected in series or parallel with the IC chips of the tags.

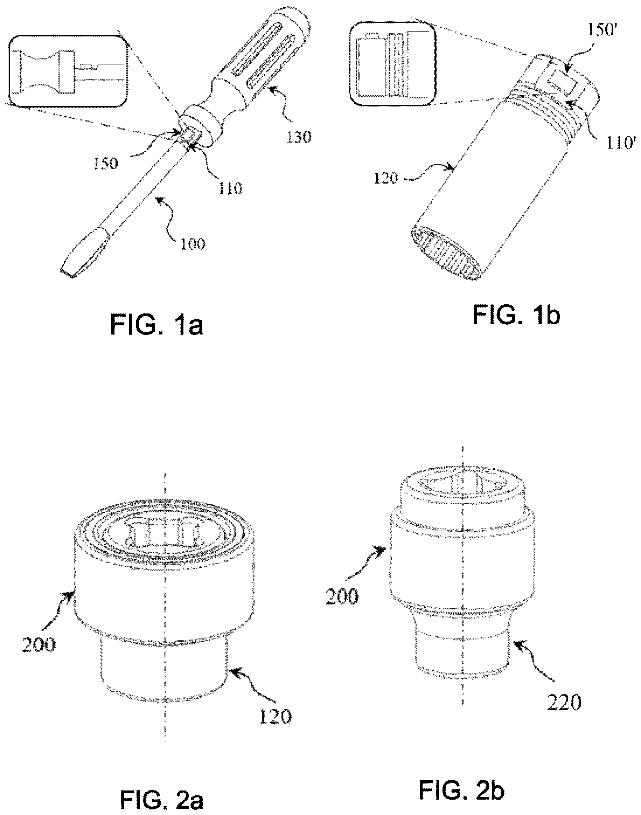

FIG. 1a shows a schematic view of a tool whose surface is processed to attach an ultra-small RFID tag. FIG. 1b shows a schematic view of another tool whose surface is processed to be planar to attach an ultra-small RFID tag. In FIG. 1a, one side of the surface of a screwdriver 100, formed of metal material and including a plastic handle 130, is processed into a planar region 110 to attach an ultra-small RFID tag 150. In FIG. 1b, one side of the surface of a socket 120 is processed into a planar region 110' to attach an ultra-small RFID tag 150'. By bringing the ground planes of the RFID tags 150, 150' to directly contact with and attach to the planar regions 110, 110' of the metal tools, metal tools 100, 120 of various shapes themselves serve as the ground for the RFID tags 150, 150'. The tags of ultra-small RFID tags 150 and 150' are typically formed with ceramic materials of high dielectric constants and PCBs containing capacitors or inductors.

In order to minimize the influence on the mechanical strength of the tools and to reduce processing costs, the smaller the planar regions 110, 110', the better. However, such structure exhibits disadvantages of a reduction in impedance bandwidth due to tag miniaturization and a change in tag performance as the attaching position of the tag on one side of various metal tools varies. In particular, the structures of the tags 150, 150' of ultra-small form narrows the impedance bandwidth of the tags attached to the metal surfaces of the tools, and the narrowed impedance bandwidth reflects tag manufacturing and attaching position errors on tag performance sensitively, thus requiring tag mass production and tools attachment to be very precise, which will make it difficult to manage tag attaching position deviations and process errors that may occur during manufacturing.

In addition, in the case of tools being attached with block-shaped RFID tags, due to the limited space and curved surface structure of tools, if tags are attached to the surfaces of the tools, it is necessary to process one side surface of the tools into a planar spatial structure for attaching RFID tags, or to process the tools to have a cavity structure for burying ultra-small tags therein. However, because it is difficult for the tools themselves to provide space for burying RFID tags, and processing the surface on one side of the tools into a planar structure for attaching RFID tags requires additional production processes, such additional production processes increase the cost of introducing the RFID system. Also, in the environment of applying tools, it may be necessary to exert relative strong torque on the tools. Therefore, the cases of deforming process to existing commercial tools (such as changing the structure of the tools on one side thereof or processing the tools into a planar structure) may have a serious impact on the mechanical strength and durability of the tools themselves, and there may be cases that processes cannot be carried out arbitrarily with different tools.

Therefore, considering the structural characteristics of existing tools, adding a sheath for attached RFID tags onto the tool surface is also a feasible solution. However, surrounding the tools with a plastic sheath after processing the tools surface may raise waterproofing issues with the tags themselves. Further, with such structure, there will be additional residual space inside the sheath in addition to the tags. After prolonged use of the tools, special chemical substances, oil, dust, etc., may enter the residual space, which will not only reduce the lifespan of the tags but also degrade the performance thereof.

In addition, the RFID tags of UHF band are typically affected by the antenna's structural design, the size and relative position of grounding surface attached with the tags, polarization consistency with the RFID reader during identification, and the reflection, interference, and absorption of radio waves of surrounding tools or other metallic and high-dielectric-constant materials. When an ultra-small RFID tag is attached to one side of the tools, the metal tool will serve as electrical ground for the antenna of RFID tag, whereby the maximum radiation gain of the tag is directed to the front direction where the tags are attached, and only a relatively small radiation gain is in the opposite direction. The radiation gain of the antenna of the RFID tag will vary as the rotation direction of the tool changes, and the radar scattering cross-section (RCS) for obtaining the maximum readable identification range appears to vary greatly with the rotation direction of the tool. This results in a significant difference in the identification rate of RFID tags at other incident angles with reference to the tools.

Therefore, there is a growing need for RFID tags that overcome the aforementioned limitations and can be enclosed within the sheath surrounding the tool surface, thereby providing users with convenience in terms of technical constraints, structure, and performance. It is necessary to consider the structural characteristics of tools, improve the electrical performance of attached RFID tags, reduce the identification rate change sensitive to the identification direction of the tags, and fundamentally solve the waterproof/dustproof problem of the tags to improve the durability of RFID tags.

### Summary of the invention

The present invention aims to overcome the above and/or other problems in the prior art. General commercial tools take the harsh application environment into consideration, require RFID tags to have high durability and reliability. However, due to the diverse structural shapes of tools, it is difficult to develop general RFID tags that can be widely used for various tools. In particular, for tools such as sockets, it is difficult to attach RFID tags due to their cylindrical structure, and because they come in various lengths and radii, it is practically impossible to deal with different tools with the same RFID tag form.

The present invention takes the usage environment and structural characteristics of the tools into consideration, and provides an RFID tag assembly having a user-friendly appearance structure and being capable to improve the directivity and electrical characteristics of the RFID tag antenna. The RFID tag assembly proposed by the present invention enables a design variable controlling the impedance of the IC chip and a design variable controlling the radiation gain of the RFID tag antenna to be independently controlled, thereby enabling the RFID tag assembly to be widely used for various sizes of tools and providing design flexibility.

According to a first aspect of the present invention, there is provided an RFID tag component, wherein the RFID tag component comprises: an insulating ring; a film antenna bonded to the inner peripheral surface of the insulating ring, the film antenna formed by connecting an IC chip with a metal loop antenna, the metal loop antenna being flexible such that the film antenna adheres to the inner peripheral surface of the insulating ring along a circumferential direction after being bonded to the inner peripheral surface; and a conducting medium layer adhering to an outer peripheral surface of the insulating ring in the circumferential direction and partially surrounding the insulating ring such that there is a slot between two ends of the conducting medium layer, wherein the conducting medium layer is inductively coupled with the metal loop antenna to radiate radio frequency signals from the IC chip outwardly through the slot.

In the structure in which there is a slot between the two ends of the conducting medium layer as described above, the electric field excited by the film antenna is concentrated at the slot of the conducting medium layer. The electric field may be used as a source to achieve a radiation gain of the RFID tag component. In addition, by scattering the electric field distribution of the conducting medium layer concentrated in the slot, there is an advantage of expanding the impedance bandwidth of the RFID tag. A structure with a slot between both ends of the conducting medium layer is considered as a long-range radiation slot. In order to increase the radiation slot in a physically confined space, slit(s) is provided in at least one end region of the conducting medium layer, whereby it may be used as a design variable to increase the radiation gain and improve the impedance bandwidth of the conducting medium layer of the RFID tag component.

According to a second aspect of the present invention, there is provided an RFID tag assembly for adapting tools, wherein the RFID tag component comprises: the RFID tag component of the preceding, and an annular jacket formed of an insulating material, the jacket having an inner layer, an outer layer, and an annular cavity between the inner layer and the outer layer for conformally accommodating the RFID tag component.

By using such a jacket and the RFID tag component conformally accommodated therein, it is able to protect the RFID tag component from harsh external environments and protect the RFID tag component in case of impact or drop, thereby improving the durability of the RFID tag component.

According to a third aspect of the present invention, there is provided an object to be identified, a portion of which is externally surrounded by the RFID tag assembly as described above.

The special RFID tag proposed by the present invention is implemented to surround small assets (such as socket tools) of various sizes and shapes from outside, thereby improving the radiation characteristics of the RFID tag and enabling better compatibility with the shapes of existing tools.

The RFID tag assembly provided by the present invention inserts the RFID tag component into the jacket structure surrounding the tools and seals it, thereby providing a method capable of solving the problems of water/dust resistance. In addition, in order to solve the defect that existing RFID tags for tools are sensitive to directionality, a two-layer structure and an inductive coupling are employed so that the radiation characteristics of the RFID tags do not sensitively change with the size of the tools and provide consistent characteristics in all directions with reference to the interface of the tools. The above characteristics enable the RFID tag to provide better tag identification performance even when it is densely placed in a limited space together with other tools in an actual tool usage environment, so as to build a stable RFID system.

Other characteristics and aspects will become clear through the following detailed description, drawings and claims.

### Description of the drawings

In order to illustrate the embodiments of the present invention or the technical solutions in the prior art more clearly, the drawings needed to be used in the description of the embodiments or the prior art will be briefly introduced below. It is apparent that drawings in the following description are some embodiments of the present invention. For those of ordinary skilled in the art, it is possible to obtain other drawings based on these drawings without exerting creative efforts, wherein:
FIG. 1a shows a schematic view of a tool whose surface is processed to be attached with an ultra-small RFID tag.
FIG. 1b shows a schematic view of another tool whose surface is processed to be planar in order to be attached with an ultra-small RFID tag.
FIGs. 2a and 2b show stereograms of the process of combining an RFID tag assembly to the exterior of a tool according to an embodiment of the present invention.
FIG. 3 shows an exploded view of an RFID tag assembly combined to the exterior of a tool according to an embodiment of the present invention.
FIG. 4 shows a stereo perspective view of an RFID tag component according to an embodiment of the present invention.
FIG. 5 shows an exploded view of an RFID tag component according to an embodiment of the present invention.
FIGs. 6a and 6b show schematic views of film antennas with IC chips positioned at different locations of the film antennas and having different circumferential spans according to optional embodiments of the present invention.
FIG. 7a shows a graph of real components of the input impedances depending on the circumferential spans of the film antenna according to an embodiment of the present invention.
FIG. 7b shows a graph of imaginary components of the input impedances depending on the circumferential spans of the film antenna according to an embodiment of the present invention.
FIG. 8a shows a schematic view of a conducting medium layer according to an embodiment of the present invention.
FIGs. 8b-8d show schematic views of slits in at least one of the two end regions of the conducting medium layer according to optional embodiments of the present invention.
FIG. 9a shows a radiation pattern diagram in radial direction of an RFID tag assembly according to an embodiment of the present invention.
FIG. 9b shows a radiation pattern diagram in axial direction of an RFID tag assembly according to an embodiment of the present invention.
FIG. 10 shows a readable range of an RFID tag assembly in radial direction of a tool according to an embodiment of the present invention.

### Detailed description

In order to make the aforementioned objects, characteristics and advantages of the present invention more readily understood, a detailed description of the embodiments of the present invention will be given in conjunction with the accompanying drawings.

Many specific details are set forth in the following description so that the present invention can be fully understood. However, the present invention can also be implemented in other ways different from those described herein. Those skilled in the art can make similar generalizations without departing from the connotation of the present invention. Therefore, the present invention is not limited to the specific embodiments disclosed below.

Secondly, the present invention will be described in detail in conjunction with schematic diagrams. When describing the embodiments of the present invention in detail, for the convenience of explanation, the cross-sectional diagrams showing the device structure will not be partially enlarged according to the general scale, and the schematic diagrams are described only as examples and should not limit the protection scope of the present invention. In addition, the three-dimensional special dimensions of length, width and depth should be included in actual production.

Specific implementations of the present invention will be described below, and it should be noted that, in the detailed description of these implementations, not all features of the actual implementations are described in detail in this description for the sake of brevity and conciseness of the description. It should be understood that, in the actual practice of any one of the implementations, just as in the course of any engineering project or design project, in order to achieve the developers' specific goals and to meet system-related or business-related restrictions, a variety of concrete decisions are often made, and this varies from one implementation to another. In addition, it should also be understood that, although the effort made in such developing process may be complex and time-consuming, some variations such as design, manufacture and production made on the basis of the technical contents disclosed in the present disclosure are just conventional technical means in the art for one of ordinary skilled in the art associated with the technical contents disclosed in the present disclosure, and the present disclosure should not be construed as insufficient.

Unless otherwise defined, technical or scientific terms used in the claims and the description should have the ordinary meaning understood by one of ordinary skills in the art which the present invention belongs to. Words "first", "second" and the like used in the description and claims of the present invention do not imply any order, quantity, or importance, but are merely used to distinguish different components. Words "one", "a/an" and the like do not imply any quantitative limitation, but rather mean "at least one". Words "including", "comprising" and the like mean that a component or item appearing before "including" or "comprising" contains a component or item and its equivalents listed after "including" or "comprising", and does not exclude other components or items. Words "connected", "coupled" and the like are neither limited to physical or mechanical connections, nor limited to direct or indirect connections.

In the present disclosure, unless otherwise specified, all implementations and preferred implementations mentioned herein may be combined with each other to form new technical solutions. In the present disclosure, unless otherwise specified, all technical features and preferred technical features mentioned herein may be combined with each other to form new technical solutions.

In the description of the implementations of the present application, the term "and/or" is only to describe an association relationship of associated objects, indicating that there may be three kinds of relationships. For example A and/or B may indicate three cases: A alone, A and B simultaneously, and B alone. In addition, the character "/" herein generally indicates that the previous and latter associated objects are in an "or" relationship.

The present invention provides a passive RFID tag used in efficient management of assets in application sites and a computerized and stable system construction for tools loss management by mounting RFID tags on small tools. RFID tags may operate in UHF band. To achieve this object, the present invention solves the problem of cumbersome attachment of tags and improves the appearance shape by utilizing an insulating double-layer jacket surrounding the tools from outside. In one embodiment, the tools or portions of the tools surrounded by the jackets may be a socket, a screwdriver, a wrench, or the like. In one embodiment, the tools may be made of metal. In order to implement the RFID tags of the present invention, an electrically coupled film antenna is provided within the insulating jacket, thereby improving the omni-directional tag identification performance and making the jacket widely applicable to tools of various sizes/radii.

FIGs. 2a-2b show stereograms of the process of combining an RFID tag assembly 200 to the exterior of a tool 220 according to an embodiment of the present invention. The tool 220 may have a curved outer surface and there may be an RFID tag component in the RFID tag assembly 200. The inner diameter of the RFID tag assembly 200 may be variable to be adjusted to optimally match the outer diameter of the tool 220, so that the RFID tag assembly 200 may be tightly enclosed outside the tool 220.In one embodiment, the portion of the tool 220 at which the RFID tag assembly 200 is to be disposed may be cylindrical. However, those skilled in the art will appreciate that the portion of the tool 220 at which the RFID tag assembly 200 is to be disposed may also be other shapes, for example, the radial cross-section of which may be elliptical, polygonal (such as quadrilateral, hexagonal, octagonal), axial symmetric, central symmetric, irregular shape, and the like.

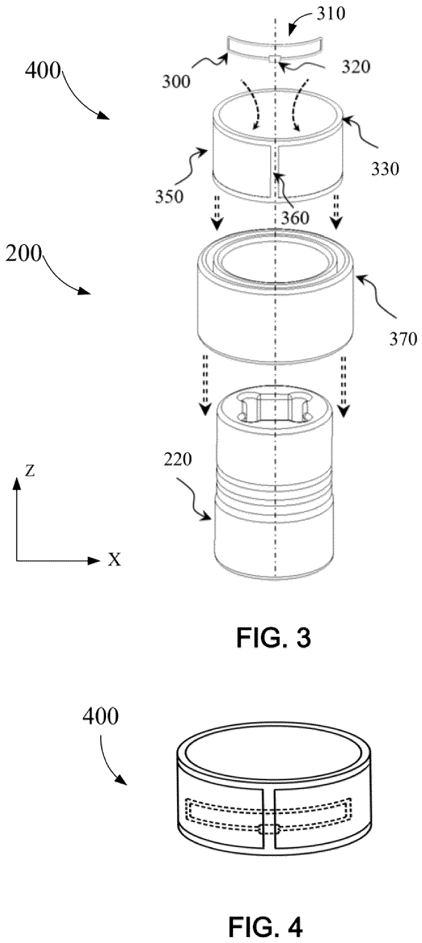

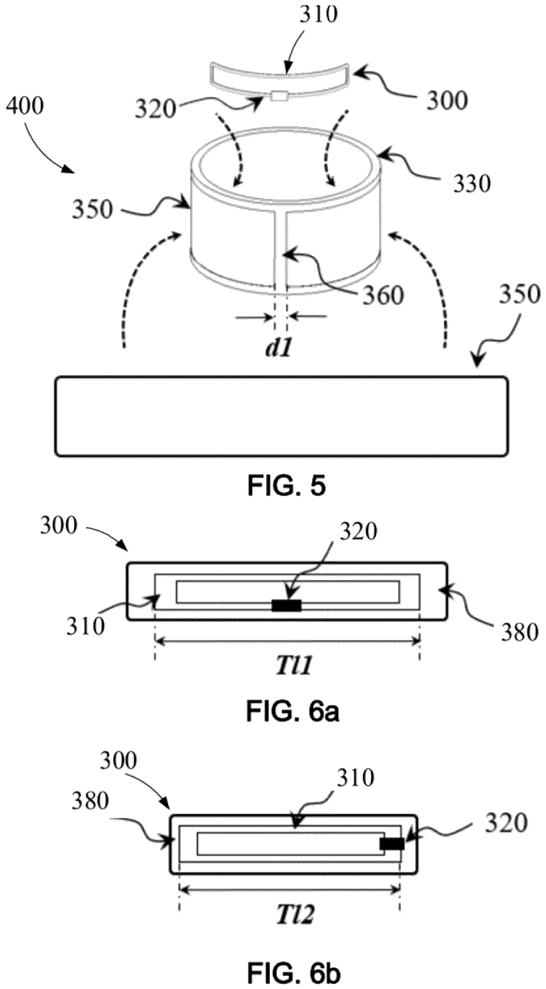

FIG. 3 shows an exploded view of an RFID tag assembly combined to the exterior of the tool 220 according to an embodiment of the present invention. FIG. 4 shows a stereo perspective view of an RFID tag component 400 according to an embodiment of the present invention. FIG. 5 shows an exploded view of the RFID tag component 400 according to an embodiment of the present invention. As shown in FIG. 3, in an embodiment of the present invention, the RFID tag assembly 200 may be attached to the tool 220 in a manner of surrounding the tool 220 from outside without any processing to the surfaces of the tool 220.The RFID tag assembly 200 containing an RFID tag component 400 therein (shown in FIG. 4) may be uniformly and stably mounted to the tool 220 by mechanical force with a jig and a mounting apparatus, such that the RFID tag assembly 200 is tightly combined with the tool 220.

As shown in FIG. 3 and FIG. 4, the RFID tag assembly 200 according to an embodiment of the present invention may be separated into an annular jacket 370 and an RFID tag component 400.The annular jacket 370 may be formed of insulating materials, such as plastic. The annular jacket 370 may be formed to have an inner layer and an outer layer with an annular cavity therebetween, as shown in FIG. 3. The annular cavity may be used to conformally accommodate the RFID tag component 400. Although the RFID tag assembly 200 is shown as a ring shape in the figure, it will be understood by those skilled in the art that the term "annular" as described herein is not limited to a ring shape, but may encompass various shapes that may surround various shaped tools, for example, the radial cross section of the RFID tag assembly 200 may be elliptical, polygonal (such as quadrilateral, hexagonal, octagonal), axial symmetric, central symmetric or irregular shape, and the like.

The RFID tag component 400 may include an insulating ring 330, a conducting medium layer 350, and a film antenna 300.The film antenna 300 may be formed by connecting the IC chip 320 with the metal loop antenna 310. In one embodiment, the IC chip 320 may operate in the UHF band. In one embodiment, the conducting medium layer 350 may be made of metal. The metal loop antenna 310 may be flexible so that the film antenna 300 may be adhered to the inner circumferential surface of the insulating ring 330 along the circumferential direction, and the conducting medium layer 350 may be flexible so that the conducting medium layer 350 may be adhered to the outer circumferential surface of the insulating ring 330 along the circumferential direction. Optionally, in order to protect the IC chip 320, after the metal loop antenna 310 is connected with the IC chip 320, epoxy resin molding may employed for protection, so that the IC chip portion of the film antenna 300 has a certain thickness. Optionally, in order to mount the relatively thick molding-protected portion of the IC chip 320 within the annular jacket 370, a groove or cavity may be provided on the inner peripheral surface side of the insulating ring 330 or within the annular jacket 370 to accommodate the molded portion of the IC chip 320.

In one embodiment, the conducting medium layer 350 may be made of a thin metal sheet, such as aluminum and copper foil. The conducting medium layer 350 may partially surround the insulating ring 330 when the conducting medium layer 350 is adhered to the outer peripheral surface of the insulating ring 330, such that there is a slot 360 between the two ends of the conducting medium layer 350, as shown in FIG. 3. The insulating ring 330 may have a certain thickness such that the film antenna 300 and the conducting medium layer 350 may be inductively coupled across the insulating ring 330. In order to be inductively coupled with the conducting medium layer 350, the metal loop antenna 310 may be formed to extend a certain distance along the circumferential direction and the axial direction of the insulating loop 330 respectively, and may be connected with the IC chip 320 to form the film antenna 300. Optionally, polyimide (PI) material (indicated by 380 in FIGs. 6a and 6b) may be employed as the substrate of the film antenna 300, which adheres the film antenna 300 to the inner peripheral surface of the insulating ring 330 by various means.

In one embodiment, in order to concentrate the maximum electric field at the conducting medium layer 350 having the slot 360 on the outer peripheral surface of the insulating ring 330, the central region of the film antenna 300 and the slot 360 between both ends of the conducting medium layer 350 may be inductively coupled by a distance in the radial direction (i.e., spaced by the insulating ring 330). That is to say, the slot 360 on the outer peripheral surface of the insulating ring 330 may be positioned to cover the center of the film antenna 300 on the inner peripheral surface of the insulating ring 330 in the radial direction. As such, the slot 360 between the two ends of the conducting medium layer 350 may essentially serve as a long-range radiation slot of the RFID tag component 300. The IC chip 320 of the film antenna 300 may be positioned at the center of a portion of the metal loop antenna 310 extending along the circumferential direction. As an example, when the film antenna 300 is formed in a substantially rectangular shape, the IC chip 320 may be connected to the metal loop antenna 310 at the midpoint position of the long side of the rectangle. In the example shown in FIG. 5, the circumferential width of the slot 360 is d1, but the circumferential width d1 of the slot 360 may vary depending on the size of the outer diameter of the insulating ring 330. The circumferential width d1 of the slot 360 does not exceed half of the circumferential span of the film antenna 300 extending along the circumferential direction. Preferably, in an embodiment, the circumferential width d1 of the slot 360 is in a range of 1 mm to 2 mm. Although the slot 360 is shown in FIGs. 3, 4, and 5 as a linear type extending along the axial direction (the Z-axis direction in FIG. 3), optionally, the slot 360 may be of other shapes. For example, the slot 360 may be formed to extend in an inclined direction with respect to the axial direction on the outer peripheral surface of the insulating ring 330, or both axial short sides of the conducting medium layer 350 constituting the slot 360 may be curved, or one is curved while the other is straight.

As shown in FIG. 5, the conducting medium layer 350 is made of a thin metal sheet substantially having a rectangular shape, and covers substantially the entire outer peripheral surface of the insulating ring 330. However, those with ordinary skill in the art will appreciate that, as long as the conducting medium layer 350 is able to perform the function of radiating wireless signals outwardly according to the present invention, the shape thereof may be alternatively selected. For example, the conducting medium layer 350 may be an irregular rectangular with an outer contour adjusted according to the outer shape of the tool, for example, to provide depressions on its long or short sides, or transforming the straight lines to curved lines completely/partially. In addition, although the axial long side of the conducting medium layer 350 is shown to be spaced apart from the end edge of the insulating ring 330 by a certain distance, the conducting medium layer 350 may be provided as not to be spaced apart by a certain distance, but to cover the entire axial length of the insulating ring 330, leaving only the slot 360. Of course, it is also possible to reduce the area of the conducting medium layer 350 covering the insulating ring 330 as long as it is capable of radiating wireless signal outward at a desired power.

The impedance of the film antenna 300 may be changed by adjusting the circumferential span of the portion of the metal loop antenna 310 extending along the circumferential direction and/or the axial span of the portion of the metal loop antenna 310 extending along the longitudinal axial direction, so that the impedance of the film antenna 300 matches the impedance of the IC chip 320. The electric field excited at a particular center frequency may form a maximum value at the conducting medium layer 350 having a slot 360 on the outer peripheral surface, and the slot 360 may serve as a radiation slot of the RFID tag component 400. The RFID tag component 400 inductively coupled in such two-layer structure enables its electrical characteristics to be less sensitive to structural changes of the tool 200, and provides design flexibility which enables respective control of the impedance and radiation gain of the RFID tag component 400.

FIGs. 6a and 6b show schematic views of IC chips positioned at different locations of metal loop antennas and the metal loop antennas having different circumferential spans according to optional embodiments of the present invention. In embodiments shown in FIGs. 6a and 6b, as an example, the metal loop antenna 310 is shown with a rectangular shape. However, those skilled in the art will appreciate that, the metal loop antenna 310 may be formed to other shapes. In the embodiment shown in FIG. 6a, the IC chip 320 is positioned at the center of the portion extending along the circumferential direction of the rectangular metal loop antenna 310, and the length of the metal loop antenna 310 extending along the circumferential direction is TI1. In the embodiment shown in FIG. 6b, the IC chip 320 is positioned at the center of the portion extending along the axial direction of the rectangular film antenna 300, and the length of the film antenna 300 extending along the circumferential direction is TI2. Although the IC chip 320 is at the center of the circumferential portion and the center of the axial portion of the film antenna 300 as shown in FIGs. 6a and 6b respectively, FIGs. 6a and 6b only show preferred embodiments, it will be contemplated by those skilled in the art the IC chip 320 may bond with the metal loop antenna 310 at other positions to form the film antenna 300.

The length of the metal loop antenna 310 in the circumferential direction (e.g., TI1 and TI2) may control the impedance of the RFID tag component 400 to match the impedance of a particular IC chip, which is thus one of important design variables of the RFID tag component 400. In the case that the length of the metal loop antenna 310 in the axial direction is constant, the real component of the impedance of the RFID tag component 400 increases as the length of the metal loop antenna 310 in the circumferential direction (e.g., TI1 and TI2) increases. Thus, by controlling the length of the metal loop antenna 310 in the circumferential direction, the impedance of the RFID tag component 400 may be effectively controlled to match the impedance of various IC chips 320.

Due to the curved surface characteristics of the insulating ring 330, the region of the IC chip 320 in the film antenna 300 is subjected to mechanically stress as the film antenna 300 adheres to the inner surface of the insulating ring 330. Thus, by positioning the IC chip 320 in a portion extending along the axial direction in the film antenna 300, it is possible to reduce stress applied to the IC chip 320 due to attachment to the curved surface.

In addition, those skilled in the art will appreciate that the function of the RFID tag component of the present invention may be realized even if the IC chip 320 is offset from the slot 360 formed by the conducting medium layer 350 adhered on the outer peripheral surface of the insulating ring 330 in the radial direction, or the center of the film antenna 300 is offset from the slot 360 in the radial direction. Further, by positioning the IC chip 320 at a region beyond the center of the portion circumferentially extending in the film antenna 300, the IC chip 320 may be offset from the slot 360 formed by the conducting medium layer 350 adhered on the outer circumferential surface of the insulating ring 330 in the radial direction, thereby providing a more flexible way of impedance matching.

Therefore, different positions of the IC chip 320 and the different relative positions of the film antenna 300 with respect to the slot 360 on the outer peripheral surface of the insulating ring 330, as exemplarily shown in optional embodiments shown in FIGs. 6a-6b, provides a method capable of changing the position of the IC chip 320 depending on the size or diameter of the tools to reduce the risk of bending of the IC chip 320 and capable of changing the electrical variables of the RFID tag component 400.

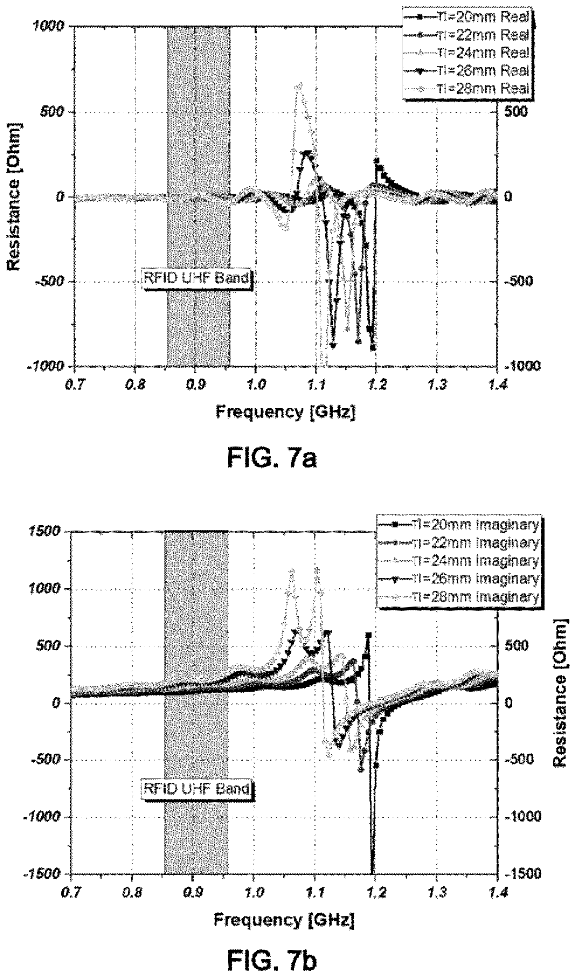

FIGs. 7a and 7b show graphs of real components and imaginary components of the input impedance according to the circumferential spans of the metal loop antenna 310 (TI1 in FIG. 6a and TI2 in FIG. 6b) according to an embodiment of the present invention respectively. FIGs. 7a and 7b show the real component and the imaginary component of the input impedance as the circumferential span of the metal loop antenna 310 gradually changes from 20 mm to 28 mm at intervals of 2 mm while the axial length of the metal loop antenna 310 is fixed at a specific length respectively. As the circumferential span of the metal loop antenna 310 increases, the resonant frequency of the RFID tag component 400 may change from 1.2 GHz to 1.1 GHz. This property may be used to adjust the imaginary component of the input impedance of the RFID tag component 400 in the frequency band of the RFID tag component 400 of UHF band to achieve complex impedance matching of the RFID tag component 400. Further, the decrease in the resonant frequency of the RFID tag component and the increase in the imaginary component of the input impedance as the circumferential span of the metal loop antenna 310 increases may be regular and linear, and thus may be advantageously used to control the electrical performance of the RFID tag component 400.

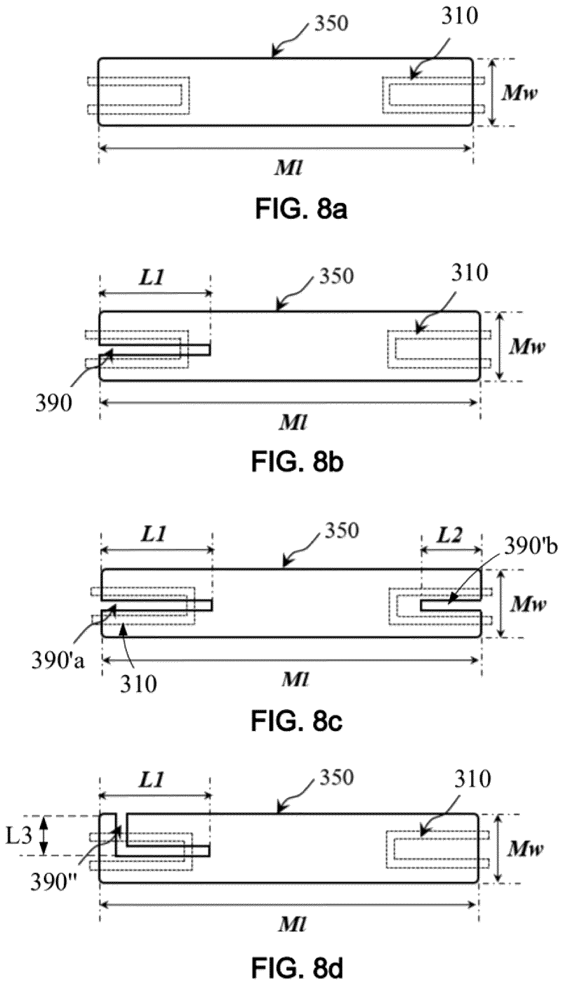

FIG. 8a shows a schematic view of a conducting medium layer according to an optional embodiment of the present invention. FIGs. 8b-8d show schematic views of slits in at least one of the two end regions of the conducting medium layer of optional embodiments of the present invention. For ease of description, directional and spatial relative terms (such as "up," "down," "left," "right," etc.) are used herein to describe the relationship of one component or feature to another component or feature as illustrated in the drawings. These directional and spatial relative terms are intended to encompass different orientations of the apparatus in use or operation in addition to the orientation depicted in the drawings. The device can be oriented in other ways (rotated 90 degrees or at other orientations) and the directional and spatial relative descriptors used herein may be interpreted accordingly.

In the embodiments of FIGs. 8a-8d, the circumferential span of the conducting medium layer 350 may be MI, and the axial span thereof may be Mw. Wherein the conducting medium layer 350 shown in FIG. 8a may be adhered to the outer peripheral surface of the insulating ring 330 and partially surrounds the insulating ring 330. The left end and the right end of the conducting medium layer 350 in FIG. 8a are close to each other contactlessly and form a slot 360 therebetween. The RFID tag component 400 formed with such a conducting medium layer 350 along with the insulating ring 330 and the film antenna 300 is shown in FIGs. 3, 4, 5. Optionally, FIG. 8b shows a schematic view with a slit 390 formed at one end of the conductive medium layer 350. As shown in FIG. 8b, the slit 390 extends in the circumferential direction by a length of L1 from the left end of the conducting medium layer 350 toward the center of the conducting medium layer 350 and is formed into a rectangle such that the inner (right side in FIG. 8b) end of the slit 390 exceeds the end of the metal loop antenna 310. Optionally, FIG. 8c shows a schematic view with slit 390'a and slit 390'b formed at both ends of the conductive medium layer 350, respectively. As shown in FIG. 8c, the slit 390'a is formed as a rectangle with a length of L1 extending in the circumferential direction from the left end of the conducting medium layer 350 toward the center of the conducting medium layer 350, such that the inner (right side in FIG. 8c) end of the slit 390'a exceeds the end of the metal loop antenna 310. The slit 390'b is formed as a rectangle with a length of L2 shorter than L1 extending in the circumferential direction from the right end of the conducting medium layer 350 toward the center of the conducting medium layer 350, such that the inner (left side in FIG. 8c) end of the slit 390'b does not exceed the end portion of the metal loop antenna 310. Optionally, FIG. 8d shows a schematic view with a slit 390" formed at one end of the conductive medium layer 350. As shown in FIG. 8d, the slit 390" extends in the axial direction by a length of L3 from the upper end of the conducting medium layer 350 and then extends in the circumferential direction toward the center of the conducting medium layer 350, such that the distance between the edge of the slit 390" closest to the center of the conducting medium layer 350 and the left end of the conducting medium layer 350 in the circumferential direction is L1, the slit 390" is formed into 'L' shape. In FIGs. 8a-8d, the film antenna 300 on the inner circumferential surface of the insulating ring 330 is partially depicted with dashed lines to schematically show the relative position of the conducting medium layer 350 and the slits therein (slit 390 in FIG. 8b, slit 390'a and slit 390'b in FIG. 8c, slit 390" in FIG. 8d) with respect to the film antenna 300. Although the slits shown in FIGs. 8b-8d have regular shapes, FIGs. 8b-8d are merely exemplary embodiments, and other shapes of the slits may be contemplated by those skilled in the art as desired. For example, the outer contour of the slit may not necessarily be formed by a straight line, but by a curved line. As shown in FIGs. 8b-8d, the area of the slits and the area surrounded by the film antenna 300 may at least partially overlap in the radial direction. Although in FIGs. 8b-8d, it is shown that the area of the slit and the area surrounded by the film antenna 300 overlap at least partially in the radial direction, those of ordinary skill in the art will appreciate that the technical effects of the present invention may be achieved even if the area of the slit and the area surrounded by the film antenna 300 do not overlap.

According to an embodiment of the present invention, the conducting medium layer 350 may be inductively coupled with the film antenna 300with a slot 360 between two ends. Such a structure of the conducting medium layer 350 with a slot 360 between two ends makes it possible for the slot 360 to be electrically used as a radiation slot for the RFID tag component 400, while a variation of the slot 360 may be achieved by forming slits in the conducting medium layer 350 (such as slits 390, 390'a, 390'b, 390" in optional embodiments shown in FIGs. 8b-8d) which may be used to improve the impedance bandwidth and radiation gain of the radiation antenna (the conducting medium layer 350 acts as) of the RFID tag component 400 .As different slits are formed in the conducting medium layer 350, the electric field distribution and the surface current distribution across the conducting medium layer 350 may be changed. In particular, such a variation of the structure of the conducting medium layer 350 may enable changes to the radiation performance of the conducting medium layer 350 and control to the center frequency of the RFID tag component 400 without changing the structure of the existing annular jacket 370 or the circumferential span of the film antenna 300.

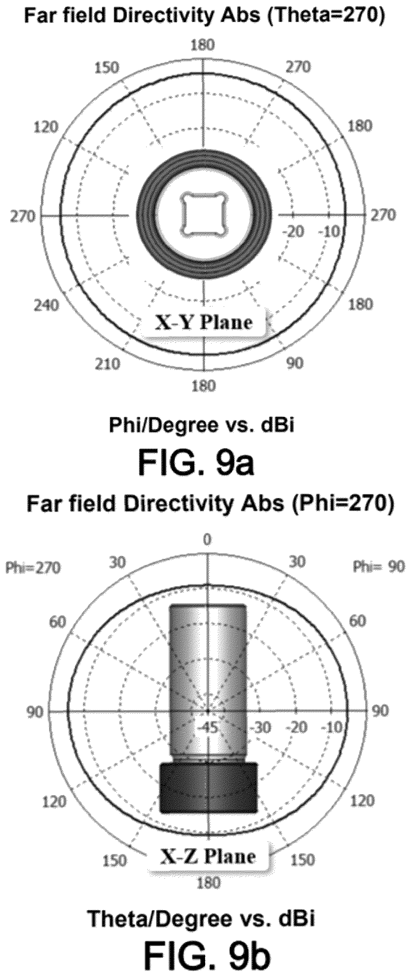

FIGs. 9a and 9b show diagrams of radiation patterns in radial direction and axial direction of an RFID tag assembly according to embodiments of the present invention. FIG. 9a shows the radiation pattern of the RFID tag assembly 200 having a UHF band center frequency of 920 MHz in the radial plane (X-Y plane) of the tools at theta = 270°, and FIG. 9b shows the radiation pattern of the RFID tag assembly 200 having a UHF band center frequency of 920 MHz in the axial plane (X-Z plane) of the tools at phi = 270°. The direction of maximum radiation gain of the RFID tag assembly using the metal tools themselves as the ground of the RFID tag assembly (the embodiments of FIGs. 1a and 1b) is outward perpendicular to the attachment surface, however the RFID tag assembly 200 according to embodiments of the present invention may form a uniform radiation pattern within the radial plane (X-Y plane) of the tool 220. In the long-range radiation pattern of the RFID tag assembly in the axial plane (X-Z plane) of the tool 220, there is also little change in the radiation gain in the phi = 0° direction and the phi = 90° direction, thus it can be determined that the identification rate of the RFID tag assembly 200 in arbitrary rotational direction of the tool 220 may be significantly improved compared to that of the RFID tag assembly attached to the ground of the metal tools.

Therefore, the characteristic of the RFID tag assembly 200 according to embodiments of the present invention that the identification rate thereof does not change significantly as the tool 220 rotates effectively improves the identification rate of the RFID tag assembly 200 of the tools when a plurality of tools are arbitrarily placed in a limited space.

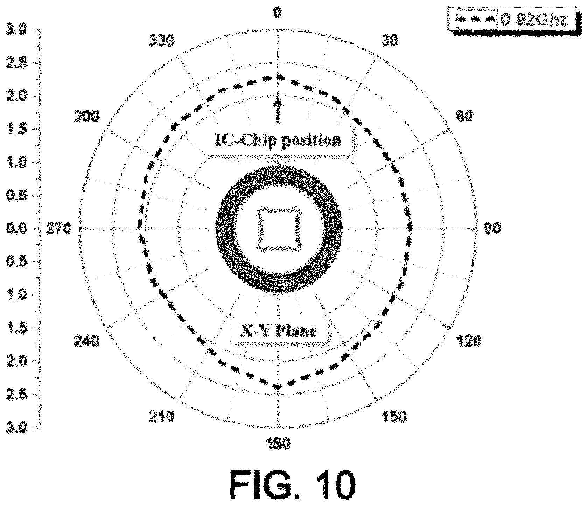

FIG. 10 shows the readable range of an RFID tag assembly in the radial direction of a tool according to an embodiment of the present invention. The readable identification range may be measured in a microwave anechoic chamber using Voyantic's Tagformance system with a standard power of 36 dBm, at any rotational orientation of the tool. The measurement may be performed by setting the plane reference angle 0° direction as the direction in which the IC chip 320 of the film antenna 300 is located within the annular jacket 370. In the center frequency band of 920 MHz, the identification range measured in any rotational direction of the tool 200 is about 2 m, and thus isotropy of the RFID tag assembly 200 in any rotational direction of the tool 200 may be exhibited. The film antenna 300 of the RFID tag assembly 200 according to the embodiment of the present invention is electromagnetically coupled with the conducting medium layer 350 such that a quasi-omni-directional identification pattern is exhibited in the long-range radiation pattern. Such characteristic enables the RFID tag assemblies of the tools to be identified by users identifying tools in usage and identification environments, regardless of the directions of the RFID tag assemblies.

So far, an RFID tag assembly has been described. The present invention comprehensively considers the structural and material characteristics of the tools and provides an easily implemented method of sleeving the RFID tag assembly outside the tool for users. Also, the RFID tag assembly according to the embodiments of the present invention may allow the RFID tag component to be completely sealed within the annular jacket by a special adhesive and ultrasonic welding process. The RFID tag assembly is not directly attached to the surfaces of the tools, but is sealed within an annular jacket, thereby solving basic water/dust resistance issues and allowing the RFID tag component to be avoided from exposure to various wash environments and chemical environments of the tools, thereby providing improved durability. In order to make the RFID tag assembly resistant to certain high temperatures, the film antenna formed by electrically connecting the IC chip and the metal loop antenna may use a PI material as the substrate, and the conducting medium layer serving as a long-range radiator may also optionally use thin Al materials, conductive silver foil materials, or the like. A film antenna and a conducting medium layer for adjusting the electrical performance of the RFID tag assembly are inserted into and sealed within the annular jacket, thereby protecting the RFID tag component from external impacts and drops occurring in the usage environment of tools.

In addition, in practical tool usage environments, when a plurality of tools are arbitrarily placed in a narrow space, it is difficult to identify a plurality of tools in batches. The RFID tag assembly according to the embodiments of the present invention is able to provide uniform identifiable characteristics in all directions in the radial plane of the tools, thereby allowing the reader identification angle to be freely selected in a practical application environment. As such, the characteristics of the RFID tag assembly according to the embodiments of the present invention do not vary sensitively as the size of the tool changes. In particular, the RFID tag assembly according to the embodiments of the present invention is not sensitive to changes in tag design variables or manufacturing process errors.

Some exemplary embodiments have been described above. However, it should be appreciated that various modifications can be made to the above described exemplary embodiments without departing from the spirit and scope of the invention. For example, if suitable results can be achieved with the described techniques being performed in a different order and/or with components of the described systems, architectures, devices, or circuits combined differently and/or replaced or supplemented by additional components or the equivalents thereof, then accordingly, other modified implementations also fall within the scope of the claims.

## Claims

1. A radio frequency identification (RFID) tag component, comprising:
an insulating ring;
a film antenna bonded to an inner peripheral surface of the insulating ring, the film antenna formed by connecting an IC chip with a metal loop antenna, the metal loop antenna being flexible such that the film antenna adheres to the inner peripheral surface of the insulating ring along a circumferential direction after being bonded to the inner peripheral surface; and
a conducting medium layer adhering to an outer peripheral surface of the insulating ring in the circumferential direction and partially surrounding the insulating ring such that there is a slot between two ends of the conducting medium layer, wherein the conducting medium layer is inductively coupled with the metal loop antenna to radiate radio frequency signals from the IC chip outwardly through the slot.

2. The RFID tag component of claim 1, wherein the conducting medium layer is formed of metal.

3. The RFID tag component of claim 1, wherein the IC chip is positioned on the film antenna at the center of a portion of the metal loop antenna extending along the circumferential direction.

4. The RFID tag component of claim 1, wherein the IC chip is positioned on the film antenna at the center of a portion of the metal loop antenna extending along an axial direction.

5. The RFID tag component of claim 1, wherein the impedance of the film antenna is able to be changed by adjusting a circumferential span of a portion of the metal loop antenna extending along the circumferential direction and/or an axial span of a portion of the metal loop antenna extending along an axial direction.

6. The RFID tag component of claim 1, wherein an impedance matching between the film antenna and the conducting medium layer is able to be adjusted by adjusting the relative position of the center of the film antenna relative to the slot in the circumferential direction.

7. The RFID tag component of claim 1, wherein the slot on the outer peripheral surface covers the center of the film antenna on the inner peripheral surface in a radial direction.

8. The RFID tag component of claim 1, wherein a circumferential width of the slot does not exceed a half of a circumferential span of the film antenna.

9. The RFID tag component of claim 8, wherein the circumferential width of the slot is in the range of 0.5 mm to 3 mm.

10. The RFID tag component of claim 1, wherein the conducting medium layer has a slit in at least one of two end regions in the circumferential direction thereof on the outer circumferential surface, and an area of the slit on the outer circumferential surface at least partially overlaps in the radial direction with the area on the inner circumferential surface surrounded by the film antenna.

11. The RFID tag component of claim 10, wherein the slit extends a length in the circumferential direction from the end of the conducting medium layer toward the center of the conducting medium layer.

12. The RFID tag component of claim 10, wherein the slit extends a height in the axial direction and a length in the circumferential direction on the conducting medium layer.

13. The RFID tag component of claim 1, wherein the IC chip operates in the UHF band.

14. An RFID tag assembly for adapting tools, comprising:
the RFID tag component of any of claims 1 to 2, and
an annular jacket formed of an insulating material, the jacket having an inner layer, an outer layer, and an annular cavity between the inner layer and the outer layer for conformally accommodating the RFID tag component.

15. The RFID tag assembly of claim 14, wherein the annular jacket is configured to enclose a portion of an object to be identified within the inner layer of the annular jacket to mount the RFID tag assembly to the object to be identified.

16. An object to be identified, a portion of which is externally surrounded with the RFID tag assembly of claim 14.

17. The object to be identified of claim 16, wherein the object to be identified includes tools having a symmetrical cross-sectional shape
